# EUROPÄISCHE PATENTANMELDUNG

(11) **EP 4 844 232 A1**
(43) Veröffentlichungstag der Anmeldung: **25.11.2026**
(21) Anmeldenummer: 25178664.6
(22) Anmeldetag: 23.05.2025
(51) Int. Cl.: F04D 29/60, F04D 29/64, F04D 29/70, B01D 46/10, F24F 13/28

(54) **GRUNDGEHÄUSE FÜR EINEN FILTERLÜFTER ODER EINEN AUSTRITTSFILTER MIT RASTEINRICHTUNGEN IN ECKBEREICHEN**

(71) Anmelder: Pfannenberg GmbH, 21035 Hamburg (DE)
(72) Erfinder: Cramer, Aaron, 21035 Hamburg (DE); Matthes, Simon, 21035 Hamburg (DE); Müller, Philipp, 21035 Hamburg (DE); Preißer, David, 21035 Hamburg (DE)
(74) Vertreter: RGTH

(57) **Zusammenfassung**

Um ein Grundgehäuse für einen Filterlüfter oder einen Austrittsfilter bereitzustellen, welcher einfach und sicher installierbar ist sowie flexibel einsetzbar ist, wird ein Grundgehäuse (100) für einen Filterlüfter oder einen Austrittfilter vorgeschlagen, wobei das Grundgehäuse (100) rahmenartig ausgebildet ist mit, insbesondere vier, Seitenflächen (10a, 10b, 10c, 10d), wobei jede Seitenfläche (10a, 10b, 10c, 10d) in Eckbereichen des Grundgehäuses (100) jeweils an eine benachbarte Seitenfläche (10a, 10b, 10c, 10d) angrenzt, wobei in wenigstens zwei, bevorzugt diagonal gegenüberliegenden, Eckbereichen des Grundgehäuses (100) jeweils eine Rasteinrichtung (11a, 11b, 11c, 11d) umfassend jeweils wenigstens zwei Rastelemente (12a, 12b, 12c, 12d), die insbesondere federelastisch ausgebildet sind, zur Montage des Grundgehäuses (100) in einer Montageöffnung angeordnet sind, wobei die wenigstens zwei Rastelemente (12a, 12b, 12c, 12d), insbesondere Rastlaschen, einer Rasteinrichtung an unterschiedlichen Seitenflächen (10a, 10b, 10c, 10d) des Grundgehäuses (100) angeordnet sind.

## Beschreibung

Die Erfindung betrifft ein Grundgehäuse für einen Filterlüfter oder einen Austrittsfilter sowie einen Filterlüfter oder einen Austrittsfilter aufweisend ein solches Grundgehäuse.

Zur Klimatisierung eines Innenraums, beispielsweise eines Innenraums eines Schaltschranks, sind Filterlüfter bekannt, welche eine Lüfterfördereinrichtung, beispielsweise ein Lüfterrad, aufweisen sowie Austrittsfilter zur Filterung von von der Lüfterfördereinrichtung in den Innenraum geförderter Luft. Der Filterlüfter oder der Austrittsfilter weist in der Regel ein Grundgehäuse auf, wobei der Filterlüfter oder der Austrittsfilter mittels des Grundgehäuses in einer Wandöffnung des Schaltschranks angeordnet ist.

Zur Befestigung des Grundgehäuses sind aus dem Stand der Technik unterschiedliche Befestigungssysteme bekannt. Beispielsweise kann das Grundgehäuse an der Wandöffnung verschraubt werden oder klemmend aufgenommen sein. Häufig ist die Anbringung des Grundgehäuses jedoch kompliziert und/oder das Grundgehäuse kann nicht optimal in unterschiedlich ausgebildeten Wandöffnungen befestigt werden.

Der Erfindung liegt somit die Aufgabe zugrunde, ein Grundgehäuse für einen Filterlüfter oder einen Austrittsfilter bereitzustellen, welcher einfach und sicher installierbar ist, sowie flexibel einsetzbar ist.

Die erfindungsgemäße Aufgabe wird gelöst durch ein Grundgehäuse für einen Filterlüfter oder für einen Austrittsfilter, wobei das Grundgehäuse rahmenartig ausgebildet ist mit, insbesondere vier, Seitenflächen, wobei jede Seitenfläche in Eckbereichen des Grundgehäuses jeweils an eine benachbarte Seitenfläche angrenzt, wobei in wenigstens zwei, bevorzugt diagonal gegenüberliegenden, Eckbereichen des Grundgehäuses jeweils eine Rasteinrichtung umfassend jeweils wenigstens zwei Rastelemente, die insbesondere federelastisch ausgebildet sind, zur Montage des Grundgehäuses in einer Montageöffnung angeordnet sind, wobei die wenigstens zwei Rastelemente, insbesondere Rastlaschen, einer Rasteinrichtung an unterschiedlichen Seitenflächen des Grundgehäuses angeordnet sind.

Das Grundgehäuse zeichnet sich vorteilhaft dadurch aus, dass in wenigstens zwei Eckbereichen eine Rasteinrichtung angeordnet ist, wobei an den beiden in dem Eckbereich zusammentreffenden Seitenfläche wenigstens ein Rastelement angeordnet ist. Somit wird eine Klemmkraft in dem Eckbereich auf beide der Seitenflächen ausgeübt, sodass das Grundgehäuse besonders sicher in der Montageöffnung angeordnet werden kann. Darüber hinaus können die Rastelemente ferner vorteilhaft als Führungselemente an beiden Seitenflächen dienen, sodass das Einsetzen des Grundgehäuses vereinfacht wird.

Bei der Montageöffnung kann es sich insbesondere um eine Wandöffnung handeln. Die Wand kann eine Wand eines Gebäudes, eines Raumes oder eines Gehäuses sein. Beispielsweise kann die Montageöffnung in einer Gehäusewand einer Klimatisierungsvorrichtung angeordnet sein.

Die Seitenflächen des Grundgehäuses sind insbesondere äußere Umfangsflächen des Grundgehäuses. Die Seitenflächen sind bevorzugt in einem rechten Winkel zueinander angeordnet und bilden zusammen einen rechteckigen, insbesondere quadratischen, Rahmen. Es sind somit insbesondere vier Seitenflächen vorhanden.

Bevorzugt ist das Grundgehäuse umlaufend geschlossen ausgebildet. In diesem Fall sind keine Durchbrechungen in den Seitenflächen ausgebildet, durch die z.B. Wasser oder Staub in das Innere des Grundgehäuses eindringen könnte, sondern die Seitenflächen sind vielmehr vollständig geschlossen ausgebildet. Die Rasteinrichtungen sind dann bevorzugt von außen auf den Seitenflächen angebracht oder angeformt. Insbesondere kann die Rasteinrichtung einstückig mit dem Grundgehäuse ausgebildet sein oder die Rasteinrichtung kann ein separates Element darstellen, welches an dem Grundgehäuse befestigt ist. Alternativ kann das Grundgehäuse Durchbrechungen im Bereich der Rasteinrichtungen bzw. in den Eckbereichen aufweisen. Die Rasteinrichtungen können dann insbesondere aus den Seitenflächen herausgeschnitten sein, wodurch die Durchbrechungen entstehen. Das Grundgehäuse umfasst insbesondere ebene Seitenflächenabschnitte, an deren Eckbereichen die Rasteinrichtungen angeordnet sind.

Bevorzugt weist das Grundgehäuse in wenigstens zwei Eckbereichen, in denen jeweils zwei der Seitenflächen aufeinandertreffen bzw. benachbart zueinander angeordnet sind, jeweils eine Rasteinrichtung auf, wobei die Eckbereiche bevorzugt zwei sich diagonal gegenüberliegende Eckbereiche sind. Die Eckbereiche liegen somit entlang einer Diagonalen, welche durch den rahmenartigen Grundkörper verläuft. Dadurch ist vorteilhaft an jeder der Seitenflächen wenigstens ein Rastelement angeordnet, sodass vorteilhaft mit bereits zwei Rasteinrichtungen eine effektive Klemm- bzw. Rastwirkung erzielt werden kann, da das Grundgehäuse an jeder der vier Seitenflächen verklemmt bzw. verrastet ist.

Die Rastelemente sind bevorzugt federelastisch ausgebildet, derart, dass die Rastelemente beim Einsetzen des Grundgehäuses in die Montageöffnung mit einer Vorspannung beaufschlagt werden. Dabei wird das Grundgehäuse insbesondere frontal, das heißt mit einer Ausrichtung einer Öffnungsfläche des Grundgehäuses parallel zu einer Öffnungsfläche der Montageöffnung, in die Montageöffnung geschoben. Während des Einschiebens wird die Vorspannung der Rastelemente aufgebaut bis das Grundgehäuse seine Einbauposition erreicht und wenigstens einige oder sämtliche Rastelemente in eine Rastposition übergehen. In der Rastposition der Rastelemente ist das Grundgehäuse in der Montageöffnung fixiert. Die Rastelemente können in der Rastposition weiterhin vorgespannt sein oder keine Vorspannung aufweisen. In der Rastposition ist das Grundgehäuse insbesondere in der Montageöffnung derart fixiert, dass das Grundgehäuse kein Bewegungsspiel in der Montageöffnung, insbesondere in Einschubrichtung und senkrecht dazu, aufweist.

Die Elastizität der Rastelemente kann bevorzugt durch die Form der Rastelemente selbst realisiert werden und/oder es können Federelemente, beispielsweise eine Schraubfeder oder ähnliches, vorgesehen sein.

Bevorzugt weisen die Rastelemente jeweils einen Rastabschnitt auf. Bevorzugt weisen die Rastelemente jeweils ein freies Ende auf, wobei der Rastabschnitt im Bereich des freien Endes ausgebildet ist oder das freie Ende, insbesondere eine Endfläche des freien Endes, des Rastelements bildet den Rastabschnitt bzw. eine Rastfläche, welche in der Rastposition des Rastelements an der Wandfläche der Montageöffnung anliegt. Alternativ oder zusätzlich kann das Rastelement einen Rastvorsprung oder eine Rastvertiefung aufweisen, welche in der Rastposition an der Wand der Montageöffnung anliegt. Bevorzugt kann ein Rastelement auch zwei oder mehr Raststufen umfassen. Beispielsweise kann an einem einzelnen Rastelement eine Raststufe durch das freie Ende gebildet sein und wenigstens eine zweite, bevorzugt eine dritte, vierte oder mehr, Raststufe bzw. Raststufen durch wenigstens einen, bevorzugt zwei, drei oder mehr, Rastvorsprung bzw. Rastvorsprünge oder eine Rastvertiefung bzw. Rastvertiefungen, welche in Einschubrichtung betrachtet versetzt zum freien Ende angeordnet ist bzw. sind, gebildet sein.

Bevorzugt weisen die Rasteinrichtungen an den unterschiedlichen Seitenflächen eines Eckbereichs jeweils wenigstens zwei, bevorzugt drei bis zwölf, Rastelemente auf. Beispielsweise können acht, zehn oder zwölf Rastelemente an einer Seitenfläche angeordnet sein. Bevorzugt sind an den Seitenflächen eines Eckbereichs die gleiche Anzahl an Rastelementen angeordnet. Beispielsweise weist eine Rasteinrichtung vier Rastelemente an jeder Seitenfläche auf. Die mehreren Rastelemente bewirken einen verbesserten Halt des Grundgehäuses in der Montageöffnung. Auch kann das Grundgehäuse beim Einsetzen in die Montageöffnung besser geführt werden, da eine größere Führungsfläche bereitgestellt wird. Die Rastelemente können identisch ausgebildet sein oder unterschiedlich ausgebildet sein, insbesondere im Hinblick auf deren Größe bzw. Form, zur Erzielung unterschiedlicher Klemm- bzw. Rastwirkungen wie nachstehend noch anhand weiterer Ausführungsformen erläutert wird. Die Rastelemente einer Seitenfläche sind insbesondere benachbart zueinander angeordnet bezogen auf eine Erstreckung entlang des Umfangs des Grundgehäuses.

Ferner können die Rastlaschen einer Rasteinrichtung oder einer Seitenfläche konstante Längen aufweisen.

Bevorzugt sind die Rastelemente Rastlaschen und die Rastelemente einer Seitenfläche weisen unterschiedliche Längen auf. Die Länge eines Rastelements ist dabei insbesondere die längste Erstreckung des Rastelements ausgehend von einem Befestigungspunkt des Rastelements an dem Grundgehäuse entlang einer der Seitenfläche abgewandten Außenseite der Rastelemente. Die Rastlaschen sind dabei insbesondere derart an der Seitenfläche angeordnet, dass die freien Enden unterschiedlich langer Rastlaschen nicht entlang einer Linie in Umfangsrichtung des Grundkörpers angeordnet sind. Insbesondere sind Rastabschnitte der Rastlaschen, welche bevorzugt an den freien Enden der Rastlaschen angeordnet sind, an unterschiedlichen Positionen entlang der Einschubrichtung senkrecht zu der Öffnungsfläche des Grundgehäuses angeordnet. Dies bewirkt vorteilhaft, dass unterschiedliche Raststufen realisiert werden können.

Eine Raststufe des Rastelements korrespondiert dabei mit einer Einschubtiefe, bei der das Rastelement in die Rastposition übergeht. Die Raststufe entspricht einer Stärke bzw. Dicke der Wand, in welcher sich die Montageöffnung befindet. Im verrasteten Zustand liegt insbesondere ein Wandkantenabschnitt der Montageöffnung, an dem das Grundgehäuse befestigt ist, an dem Rastelement bzw. dessen Rastfläche einerseits und einem umlaufenden Flansch des Grundgehäuses, welcher nachfolgend noch näher beschrieben wird, anderseits an. Der Wandkantenabschnitt ist demnach zwischen dem Flansch und den Rastelementen angeordnet. Die Raststufe entspricht mit anderen Worten einem Abstand zwischen den Rastelementen bzw. deren Rastflächen und dem Flansch. Ein großer Abstand entspricht dabei einer hohen Raststufe und ein geringer Abstand entsprechend einer geringen Raststufe. Der Abstand ist dabei insbesondere der kürzeste Abstand zwischen einem Endbereich des Rastelements und dem Flansch.

Rastlaschen mit vergleichsweise kurzer Länge rasten bei geringerer Einschubtiefe in der Rastposition ein und sind somit zum Fixieren des Grundgehäuses in Wandflächen mit einer größeren Wandstärke ausgebildet. Demgegenüber längere Rastlaschen rasten bei größerer Einschubtiefe in der Rastposition und fixieren das Grundgehäuse somit in Wandflächen mit einer geringeren Wandstärke. Das Grundgehäuse kann somit mit Vorteil in Montageöffnungen in Wänden mit unterschiedlicher Wandstärke eingesetzt werden. Die Anzahl der unterschiedlichen Längen der Rastelemente bestimmt dabei die Anzahl unterschiedlicher Wandstärken, in welche das Grundgehäuse optimal, das heißt ohne Bewegungsspiel des Grundgehäuses in der Montageöffnung, eingesetzt werden kann.

Bevorzugt sind die Rastelemente einer Rasteinrichtung, die auf derselben Seitenfläche angeordnet sind, in Umfangsrichtung des Grundgehäuses benachbart zueinander angeordnet und eine Länge der Rastelemente nimmt ausgehend von einer Ecke des Eckbereichs entlang der Umfangsrichtung betrachtet, insbesondere linear, zu oder ab. Mit einer solchen Anordnung der Rastlaschen ist das Grundgehäuse besonders einfach herstellbar.

Bevorzugt weisen sämtliche Rastelemente einer Rasteinrichtung unterschiedliche Längen zueinander auf, wobei ferner bevorzugt ausgehend von dem kürzesten Rastelement hin zu dem längsten Rastelement die Rastelemente abwechselnd auf die zwei Seitenflächen eines Eckbereichs verteilt sind. Bei einer rein gedanklichen Sortierung der Rastelemente nach deren Längen ist der Verlauf der Längen bevorzugt linear. Das bedeutet, dass die Längenzunahme konstant ist.

Sind beispielsweise acht Rastelemente an einer Rasteinrichtung vorgesehen, können diese nach Länge sortiert von Nummer eins bis Nummer acht durchnummeriert werden, wobei das Rastelement Nummer eins die größte Länge und das Rastelement Nummer acht die kleinste Länge aufweist und die Länge der Rastelemente von Nummer eins hin zu Nummer acht, insbesondere linear, abnimmt. Die Rastelemente mit geraden Nummern 2, 4, 6, 8 sind dann bevorzugt an einer ersten Seitenfläche und die Rastelemente mit ungeraden Nummern 1, 3, 5, 7 sind bevorzugt an der zweiten Seitenfläche der gleichen Rasteinrichtung angeordnet.

Bevorzugt stehen die Rastelemente vollständig oder abschnittsweise jeweils in einem ersten Winkel zu einer Ebene der Seitenfläche von der Seitenfläche hervor. Der erste Winkel wird insbesondere entlang der Länge der Rastelemente gemessen. Während des Einschiebens des Grundgehäuses in die Montageöffnungen kommen die hervorstehenden Rastelemente in Kontakt mit der Montageöffnung bzw. der umlaufenden Kante der Montageöffnung und werden aufgrund der Elastizität der Rastelemente vorgespannt in Richtung der Seitenflächen bis zum Erreichen der Rastposition, wobei die Rastelemente sich wieder in einer Richtung weg von der Seitenfläche in die Rastposition bewegen oder in einer vorgespannten Rastposition verbleiben. Die Rastelemente bzw. zumindest deren nach außen gewandte Flächen weisen somit zumindest abschnittsweise oder vollständig eine Steigung in Einschubrichtung auf.

Bevorzugt kann das Rastelement vollständig in dem ersten Winkel angeordnet sein. Wenn das Rastelement als Rastlasche ausgebildet ist, steht somit insbesondere die gesamte Rastlasche bzw. deren Längsachse in dem ersten Winkel von der Seitenfläche hervor. Alternativ kann auch nur eine nach außen gewandte Seite des Rastelements in dem ersten Winkel angeordnet sein, während eine innere Seite des Rastelements parallel zu der Seitenfläche angeordnet ist.

Bevorzugt nimmt der erste Winkel der Rastelemente einer Seitenfläche ausgehend von einer Ecke des Eckbereichs entlang der Umfangsrichtung betrachtet, insbesondere linear, zu oder ab. Durch den zunehmenden Abstand der Rastelemente zu der Seitenfläche steht das Rastelement in Einschubrichtung insbesondere in zunehmendem Maße von der Seitenfläche hervor, sodass die ansteigende, den Seitenflächen abgewandte Außenseite des Rastelements ausgebildet wird, entlang derer das Rastelement beim Einschieben des Grundgehäuses in Richtung der Seitenfläche gedrückt wird.

Bevorzugt weisen die Rastelemente Endflächen auf, wobei der Seitenfläche abgewandte Kanten der Endflächen der Rastelemente einer Seitenfläche entlang einer Linie angeordnet sind und wobei Längen der Rastelemente entlang der Linie betrachtet zunehmen oder abnehmen und/oder wobei die Linie in einem zweiten Winkel größer als Null zu der Seitenfläche angeordnet ist. Der zweite Winkel beträgt bevorzugt zwischen 3 und 20 Grad. Bevorzugt sind ferner die der Seitenfläche zugewandten Kanten der Endflächen entlang einer Linie angeordnet. Bevorzugt verläuft diese Linie parallel zu der Seitenfläche.

Die gemeinsame Linie der der Seitenfläche abgewandten Kanten der Endflächen der Rastelemente einer Seitenfläche ist ferner bevorzugt in einem vierten Winkel relativ zu einem nachfolgend näher beschriebenen umlaufenden Flansch des Grundgehäuses angeordnet. Der vierte Winkel ist insbesondere größer als Null und beträgt insbesondere zwischen 3° und 20°.

Bevorzugt kann einzig der Verlauf der der Seitenfläche abgewandten Kante jenes Rastelements, welches unmittelbar benachbart zur Ecke des Eckbereichs angeordnet ist, von der vorbeschriebenen Linie abweichen. Dieses Rastelement kann einen Ausschnitt bzw. einen abgerundeten äußeren Eckbereich aufweisen. Insbesondere weisen die beiden unmittelbar benachbart zur Ecke angeordneten Rastelemente an den beiden Seitenflächen jeweils einen solchen Ausschnitt bzw. Abrundung auf. Dadurch wird das Einsetzen des Grundgehäuses in die Wandöffnung vorteilhaft erleichtert.

Bevorzugt ist das Rastelement in einer Querschnittsbetrachtung senkrecht zu dessen Längsachse viereckig, insbesondere parallelogrammförmig, trapezförmig, rechteckig oder quadratisch, ausgebildet. Ferner können die Rastelemente in der Querschnittsbetrachtung die Form eines Parallelogramms aufweisen, wobei bevorzugt der kleinere Innenwinkel zwischen 40° und 50°, beispielsweise 45°, beträgt. Insbesondere ist zwischen zwei Rastelementen jeweils ein Zwischenraum ausgebildet, in denen sich die seitlichen Flächen zweier benachbarter Rastelemente gegenüberliegen. Die seitlichen Flächen erstrecken sich dabei parallel zueinander. Ferner können die seitlichen, sich gegenüberliegenden Flächen zweier benachbarter Rastelemente auch nicht parallel zueinander angeordnet sein. Insbesondere können die seitlichen Flächen einen siebten Winkel größer Null einschließen, wobei der siebte Winkel bevorzugt zwischen 0,1° und 3,5°, besonders bevorzugt zwischen 0,25° und 3,25°, besonders bevorzugt zwischen 0,5° und 3°, betragen kann. Insbesondere verjüngen sich die Rastelemente in einer Draufsicht bzw. in einer Querschnittsansicht somit konisch hin zu deren freien Enden. Bevorzugt stehen die seitlichen Flächen dabei senkrecht zu einer Ebene des Flansches.

Bevorzugt schließen die seitlichen Flächen der Rastelemente und eine Ebene der Seitenfläche einen fünften Winkel zwischen 40° und 50°, beispielsweise 45°, ein. Insbesondere schließen sämtliche seitliche Flächen der Rastelemente den gleichen Winkel mit der Ebene der Seitenfläche ein.

Bevorzugt weisen die Rastelemente in einer Querschnittsbetrachtung an einem dem freien Ende abgewandten Ende die Form eines Parallelogramms auf.

Bevorzugt sind den Seitenflächen abgewandte Außenseiten der Rastelemente einer Seitenfläche in einer gemeinsamen ersten Ebene angeordnet. Dadurch wird insbesondere eine Führungsfläche gebildet zum Führen des Grundkörpers beim Einsetzen in die Montageöffnung. Die gemeinsame erste Ebene kann bevorzugt schräg zu einer Ebene der Seitenfläche angeordnet sein. Die Rastelemente bzw. deren Außenseiten sind somit entlang des Umfangs des Grundgehäuses betrachtet in unterschiedlichen, bevorzugt größer oder kleiner werdenden, ersten Winkeln zur Seitenfläche angeordnet. Der erste Winkel ist insbesondere größer als Null und beträgt insbesondere zwischen 3° und 20°. Die gemeinsame erste Ebene ist insbesondere um eine erste und/oder eine zweite Achse relativ zu der Ebene der Seitenfläche gekippt bzw. rotiert. Die erste Achse (z-Achse) verläuft senkrecht zu der Öffnungsfläche des Grundgehäuses bzw. senkrecht zu einer Ebene des Flansches. Durch diese Kippung ergibt sich insbesondere der zuvor beschriebene vierte Winkel. Zusätzlich kann die gemeinsame erste Ebene um die zweite Achse (y-Achse) entlang des Umfangs des Grundgehäuses und parallel zu der Seitenfläche gekippt bzw. rotiert sein. Dadurch ergibt sich insbesondere der zuvor beschriebene erste Winkel.

Bevorzugt sind ferner Endflächen der Rastelemente in einer gemeinsamen zweiten Ebene angeordnet. Die zweite Ebene kann senkrecht oder gekippt bzw. rotiert zu der Seitenfläche verlaufen, an der die Rastelemente angeordnet sind. Die zweite Ebene ist insbesondere nicht senkrecht zu der Seitenfläche angeordnet. Die zweite Ebene ist relativ zu der Ebene der Seitenfläche um die zweite Achse (y-Achse) und/oder um eine dritte Achse (x-Achse), welche senkrecht zu der ersten und der zweiten Achse verläuft, gekippt bzw. rotiert. Insbesondere schließt die zweite Ebene einen sechsten Winkel kleiner als 90° mit der Ebene der Seitenfläche ein. Der sechste Winkel beträgt insbesondere zwischen 80° und 50°.

Bevorzugt weist das Grundgehäuse einen, insbesondere vollständig oder abschnittweise, entlang des Umfangs verlaufenden Flansch auf, welcher den Rastelementen bzw. Endflächen der Rastelemente gegenüberliegt.

Bevorzugt sind den Seitenflächen abgewandte Außenseiten der Rastelemente einer Seitenfläche in einer gemeinsamen ersten Ebene angeordnet, wobei die erste Ebene insbesondere um eine erste und/oder eine zweite Achse relativ zu der Ebene der Seitenfläche gekippt bzw. rotiert ist. Bevorzugt weisen die Rastelemente Endflächen auf, wobei der Seitenfläche abgewandte Kanten der Endflächen der Rastelemente einer Seitenfläche entlang einer Linie angeordnet sind und wobei Längen der Rastelemente entlang der Linie betrachtet zunehmen oder abnehmen. Gleichzeitig sind die Rastelemente bevorzugt als Rastelemente ausgebildet und ausschließlich mit einem einem freien Ende der Rastlasche abgewandten Ende an dem Grundgehäuse befestigt. Insbesondere sind die Rastelemente dadurch dazu ausgebildet, bei einer Krafteinwirkung auf die der Seitenfläche des Grundgehäuses abgewandten Außenseiten im Wesentlichen gleichzeitig eine Biegebewegung und eine Torsionsbewegung durchzuführen, welche bevorzugt dazu führen, dass sich der Abstand zwischen den Rastelementen und dem Flansch vergrößert und/oder sich eine auf die Seitenfläche projizierte Länge der Rastelemente verringert, sodass bevorzugt für unterschiedlich lange Rastelemente bevorzugt eine im Wesentlichen stufenlose Verrastung möglich ist. Die Biegung erfolgt dabei insbesondere in einer Richtung senkrecht zu der Seitenfläche des Grundgehäuses und die Torsionsbewegung erfolgt insbesondere um die Längsachse der Rastlasche, sodass eine kombinierte Bewegung zu einer seitlichen Bewegung nach links oder rechts führt je nach Rotationsrichtung der Torsion.

Insbesondere die Kombination der in der schrägen, zweiten Ebene verlaufenden Endflächen der Rastelemente sowie deren unterschiedlichen Längen untereinander wie vorstehend beschrieben führt dazu, dass ein im Wesentlichen stufenloser Rastmechanismus bereitgestellt wird. Zum einen werden bereits durch die unterschiedlichen Längen verschiedene Raststufen für unterschiedliche Wandstärken bereitgestellt. Zum anderen können aufgrund des Hervorstehens der Rastelemente von der Seitenfläche und deren elastischen Ausgestaltung ferner zwei Rastelemente unterschiedlicher Länge gleichzeitig greifen. Ein erstes Rastelement, welches gegenüber einem zweiten, benachbarten Rastelement länger ist, aber weiter von der Seitenfläche hervorsteht als das zweite Rastelement, kann gleichzeitig mit dem zweiten Rastelement greifen, aufgrund der elastischen Eigenschaften und der damit verbundenen möglichen Biegung der Rastelemente.

Bevorzugt sind die Rastelemente als Rastlaschen ausgebildet, welche an Enden, welche den freien Enden gegenüberliegen, an dem Grundgehäuse direkt oder über einen nachfolgend noch beschriebenen Klemmsteg befestigt sind. Die Rastlaschen erstrecken sich somit beabstandet zu der Ebene der Seitenflächen. Insbesondere erstrecken sich Innenseiten der Rastelemente, welche den Außenseiten der Rastelemente abgewandt sind parallel zu einer Ebene der Seitenfläche. Insbesondere sind die Innenseiten in einer gemeinsamen Ebene angeordnet. Durch den Abstand zwischen den Innenseiten der Rastelemente und der jeweiligen Seitenfläche wird ein Raum bereitgestellt, in welchen sich die Rastelemente im Zuge der elastischen Verformung hineinbewegen können. Insbesondere durch die Ausgestaltung der zuvor beschriebenen ersten Ebene und der schrägen Erstreckung der Rastelemente relativ zu der Seitenfläche in dem zuvor beschriebenen fünften Winkel führen die Rastelemente zum einen eine Biegebewegung in Richtung der Seitenfläche aus. Gleichzeitig führen die Rastelemente eine Biegebewegung in Richtung des vierten Winkels durch. Diese beiden Biegebewegungen überlagern sich zu einer Torsionsbewegung der Rastelemente. Durch die Torsionsbewegung vergrößert sich der Abstand zwischen den Rastelementen und dem Flansch bzw. verringert sich eine auf die Seitenfläche projizierte Länge der Rastelemente. Beim Einschieben des Grundgehäuses in die Montageöffnung können somit zwei, insbesondere direkt benachbarte, Rastelemente unterschiedlicher Länge gleichzeitig in die Rastposition übergehen. Während des Einsetzens werden die beiden Rastelemente elastisch verformt, wobei zunächst das erste, kürzere der beiden Rastelemente in die Rastposition übergeht. Da das zweite, längere Rastelement weiter von der Seitenfläche vorsteht, ist das zweite, längere Rastelement zu diesem Zeitpunkt bereits stärker verformt bzw. weiter verdreht und weist dadurch den gleichen Abstand zu dem Flansch bzw. die gleiche auf die Seitenfläche projizierte Länge auf wie das erste Rastelement. Beide Rastelemente greifen somit gleichzeitig, wobei das erste Rastelement nicht mehr elastisch verformt ist, sondern in seine Ausgangsposition zurückgekehrt ist und das zweite Rastelement weiterhin elastisch verformt ist und mechanisch vorgespannt an der Wandöffnung anliegt. Da die Endfläche eines Rastelements wie vorstehend beschrieben gekippt bzw. rotiert angeordnet ist, kann diese aufgrund der Torsionsbewegung bei unterschiedlichen Wandstärken einrasten. Hierdurch wird insbesondere eine stufenlose Verrastung erreicht.

Der Flansch bildet insbesondere eine Anlagefläche für den Wandflächenabschnitt der Montageöffnung, in welcher das Grundgehäuse eingesetzt ist. Der Flansch verläuft insbesondere entlang der Seitenflächen. Der Flansch kann bevorzugt durchgängig entlang des Umfangs angeordnet sein oder Durchbrechungen aufweisen.

Bevorzugt weist das Grundgehäuse einen entlang des Umfangs verlaufenden Flansch auf, welcher den Rastelementen gegenüberliegt, wobei die minimalen Abstände der dem Flansch zugewandten Endflächen der Rastelemente und dem Flansch zwischen 0,5 mm und 6 mm, bevorzugt zwischen 1 mm und 4 mm, besonders bevorzugt zwischen 2 mm und 3 mm beträgt. Beispielsweise können an einer Seitenfläche vier Rastelemente angeordnet sein, deren Abstände zum Flansch 1 mm, 2 mm, 3mm und 4 mm entsprechen. An der anderen Seitenfläche derselben Rasteinrichtung können vier weitere Rastelemente angeordnet sein, deren bzw. Abstände zum Flansch 1,5 mm, 2,5 mm, 3,5 mm und 4,5 mm entsprechen. In Kombination mit dem Merkmal, wonach dem Flansch zugewandte Flächen der Rastelemente in einer Ebene angeordnet sind, welche schräg zu einer Ebene des Flansches verläuft, kann ein stufenloses Verrasten des Grundgehäuses in der Wandöffnung erreicht werden, da zwei Rastelemente unterschiedlicher Länge gleichzeitig verrasten können. Dies ist möglich, da die Rastelemente elastisch gebogen werden können und aufgrund des schrägen Verlaufs der Endflächen der Rastelemente ein verhältnismäßig langes Rastelement, welche gegenüber einem kürzeren Rastelement weiter von der Seitenfläche absteht, gleich mit dem kürzeren Rastelement einrasten kann. So kann beispielsweise ein Rastelement mit einem Abstand von 1,5 mm zum Flansch gleichzeitig mit einem Rastelement mit einem Abstand von 1 mm zum Flansch einrasten durch Verbiegen des Rastelements mit dem Abstand von 1 mm. Durch das Verbiegen wird der Abstand effektiv auf 1,5 mm vergrößert.

Bevorzugt nimmt entlang einer Längsachse der Rastelemente hin zu einem freien Ende der Rastelemente betrachtet eine Querschnittsfläche der Rastelemente zu. In einem Verbindungsbereich zwischen dem Rastelement und der Seitenfläche ist der Querschnitt bevorzugt gering, sodass die Rastelemente eine gewisse Elastizität aufweisen. Hin zu dem freien Ende nimmt der Querschnitt zu, sodass bevorzugt im Bereich des freien Endes eine möglichst große Rastfläche bereitgestellt wird.

Bevorzugt ist in wenigstens zwei, bevorzugt in jedem, der Eckbereiche des Grundgehäuses eine Rasteinrichtung angeordnet. Sofern ausschließlich zwei Rasteinrichtungen vorgesehen sind, sind diese bevorzugt an sich diagonal bzw. schräg gegenüberliegenden Eckbereichen angeordnet. Ferner können die zwei Rasteinrichtungen auch an benachbarten Eckbereich angeordnet sein. Bezogen auf einen Einbauzustand des Grundgehäuses können die Rasteinrichtungen beispielsweise an den oberen beiden Eckbereichen, an den unteren beiden Eckbereichen oder an den seitlichen Eckbereichen bzw. an der linken oder rechten Seite angeordnet sein. Die Rasteinrichtungen können bevorzugt identisch ausgebildet sein. Sofern in jedem der Eckbereiche des Grundgehäuses eine Rasteinrichtung angeordnet ist, weisen dabei bevorzugt sämtliche Rastelemente einer Rasteinrichtung untereinander unterschiedliche Längen auf. Dies führt insbesondere dazu, dass zu jedem Rastelement einer Seitenfläche ein Rastelement gleicher Länge an der jeweils gegenüberliegenden Seitenfläche vorhanden ist. Es liegen sich somit bevorzugt Rastelemente gleicher Länge an unterschiedlichen Seitenflächen gegenüber, sodass stets zwei Rastelemente an gegenüberliegenden Seitenflächen gleichzeitig greifen. Die Rastelemente dieser Rastelementpaarungen mit gleicher Länge gehören dabei insbesondere zu Rasteinrichtungen, welche sich schräg bzw. diagonal gegenüberliegen, also nicht direkt benachbart sind. Rastelemente an sich gegenüberliegenden Seitenflächen zweier direkt benachbarter Rasteinrichtungen weisen entsprechend bevorzugt unterschiedliche Längen untereinander auf. Diese Ausführungsform der Rasteinrichtung kann auch vorgesehen werden, wenn nicht in jeder Ecke des Grundgehäuses eine Rasteinrichtung vorhanden ist.

Bevorzugt sind die Rastelemente einstückig mit dem Grundgehäuse oder als separate, mit dem Grundgehäuse verbundene Elemente ausgebildet.

Bevorzugt besteht das Grundgehäuse aus Kunststoff oder umfasst Kunststoff. Insbesondere ist das Grundgehäuse in einem Spritzgussverfahren hergestellt.

Bevorzugt ist der Befestigungsbereich der Rastelemente und den Seitenflächen nach Art einer Flachfeder, das heißt eines flachen, elastischen Materialabschnitts, welcher das Rastelement mit der Seitenfläche verbindet, ausgebildet. Dadurch sind die Rastelemente bevorzugt federelastisch an den Seitenflächen angeordnet. Durch Drücken der Rastelemente in Richtung der Seitenflächen kann eine Vorspannung der Rastelemente aufgebaut werden.

Bevorzugt sind die Rastelemente einer Rasteinrichtung an einem an dem Grundgehäuse befestigten, winkelförmigen Klemmsteg angeordnet, wobei der Klemmsteg sich beabstandet von dem Grundgehäuse um eine Ecke des Eckbereichs erstreckt, wobei bevorzugt der Klemmsteg ausschließlich an dessen beiden Endbereichen an dem Grundgehäuse befestigt ist. Die Rastelemente sind somit insbesondere nicht direkt an einer ebenen Fläche der Seitenflächen befestigt, sondern an dem Klemmsteg, welcher wiederum, insbesondere ausschließlich endseitig, an den Seitenflächen befestigt ist. Der Klemmsteg weist insbesondere eine L-Form auf, welche um die Ecke des Eckbereichs in Umfangsrichtung des Grundgehäuses verläuft, sodass je ein Klemmstegabschnitt an jeder Seitenfläche eines Eckbereichs bzw. einer Rasteinrichtung verläuft. Das der Ecke des Eckbereichs abgewandte Ende eines Klemmstegabschnitts ist dabei an einer Seitenfläche befestigt. In den übrigen Bereichen verläuft der Klemmsteg beabstandet zu der Ebene der Seitenfläche um die Ecke des Eckbereichs herum. Entsprechend erstrecken sich auch die Rastelemente an dem Klemmsteg beabstandet und insbesondere parallel zur Ebene der Seitenfläche. Der Klemmsteg stellt vorteilhaft eine zusätzliche Elastizität der Rasteinrichtung zusätzlich zu der Elastizität der Rastelemente bereit. Beim Einsetzen des Grundgehäuses in die Montageöffnung kann der Klemmsteg zusammen mit den Rastelementen in Richtung der Seitenflächen gedrückt werden, sodass das Einsetzen des Grundgehäuses vereinfacht wird und zusätzlich die Klemmwirkung verbessert wird.

Insbesondere ist der Klemmsteg zusammen mit den Rastelementen einstückig mit dem Grundgehäuse ausgebildet. Insbesondere ist das Grundgehäuse im Zuge eines Spritzgussverfahrens gefertigt.

Bevorzugt weist das Grundgehäuse ferner ein Schutzelement, insbesondere ein Schutzgitter, auf, welches eine Öffnungsfläche des rahmenartigen Grundgehäuses abdeckt. Das Schutzelement kann insbesondere Streben und/oder Lamellen umfassen bzw. ein Lamellengitter sein.

Die erfindungsgemäße Aufgabe wird ferner gelöst durch einen Filterlüfter und/oder einen Austrittsfilter, aufweisend ein Grundgehäuse nach einer der vorgenannten Ausführungsformen. Insbesondere ist an dem Grundgehäuse wenigstens ein Filterelement, insbesondere eine Filtermatte, angeordnet, welche insbesondere die Öffnungsfläche des rahmenartigen Grundgehäuses abdeckt, um den Austrittsfilter zu bilden. Der Austrittsfilter zusammen mit einem Lüfterelement bildet den Filterlüfter. Das Filterelement ist insbesondere zwischen dem Schutzelement des Grundgehäuses und dem Lüfterelement angeordnet.

Darüber hinaus wird die erfindungsgemäße Aufgabe gelöst durch ein Verfahren zur Herstellung eines Grundgehäuses gemäß einer der vorbeschriebenen Ausführungsformen umfassend die folgenden Schritte:
- Bereitstellen einer Spritzgussform, wobei die Spritzgussform zwei Innenseitenflächen aufweist, welche komplementär zu den Seitenflächen eines Eckbereichs des Grundgehäuses ausgebildet sind, wobei an den Innenseitenflächen jeweils mehrere Vorsprünge angeordnet sind, welche Zwischenräumen zwischen den zu formenden Rastelementen der Rasteinrichtung entsprechen, wobei die Vorsprünge beider Innenseitenflächen in einer gleichen Richtung, bevorzugt in einem dritten Winkel zwischen 40° und 50°, von der Spritzgussform hervorstehen,
- Befüllen der Spritzgussform mit dem Spritzgussmaterial, wobei die Rastelemente zwischen den Vorsprüngen ausgebildet werden,
- Aushärten des Spritzgussmaterials, und
- Entfernen der Spritzgussform, wobei die Spritzgussform entgegen der Richtung, in welcher die Vorsprünge von der Spritzgussform hervorstehen, von dem Grundgehäuse weg bewegt wird.

Bevorzugt wird ein winkelförmiges Schieberelement in die Spritzgussform eingelegt, derart, dass das Schieberelement, insbesondere mit dessen zwei Außenseiten, an freien Enden der Vorsprünge anliegt, zur Ausbildung eines an dem Grundgehäuse beabstandet angeordneten und sich um die Ecke des Eckbereichs erstreckenden winkelförmigen Klemmstegs, an welchem die Rasteinrichtung angeordnet ist. Das Schieberelement sorgt insbesondere für einen Freiraum zwischen den Seitenflächen des Grundgehäuses und den Rastelementen, sodass die Rastelemente beabstandet an dem Klemmsteg von den Seitenflächen angeordnet sind. Bevorzugt weist das Schieberelement einen L-förmigen Querschnitt auf.

Das vorbeschriebene Herstellungsverfahren ermöglicht es vorteilhaft, eine oder mehrere Rasteinrichtungen des Grundgehäuses mit einer einzigen Spritzgussform herzustellen. Insbesondere können die Rastelemente beider Seitenflächen in einem Spritzgussvorgang mit einer Spritzgussform hergestellt werden. Dies wird insbesondere dadurch erreicht, dass die Rastelemente und somit die komplementär zu den Rastelementen ausgebildeten Vorsprünge nicht senkrecht von den Seitenflächen des Grundgehäuses bzw. den Innenseitenflächen der Spritzgussform hervorstehen, sondern in einem dritten Winkel zwischen bevorzugt 40° und 50°, insbesondere von 45°, von den Seitenflächen bzw. den Innenseitenflächen hervorstehen. Dieser dritte Winkel korrespondiert insbesondere mit dem zuvor beschriebenen fünften Winkel, in dem die seitlichen Flächen der Rastelemente von den Seitenflächen hervorstehen. Da die Vorsprünge sich alle parallel in die gleiche Richtung erstrecken, können die Vorsprünge nach dem Aushärten des Spritzgussmaterials aus den Zwischenräumen zwischen den durch das Spritzgussmaterial gebildeten Rastelementen geschoben werden um die Spritzgussform zu entfernen. Entsprechend erstrecken sich insbesondere auch die so ausgebildeten Rastelemente in einem Winkel zwischen 40° und 50°, insbesondere 45° von den Seitenflächen.

Ferner können sich Seitenflächen eines Vorsprungs des Spritzgussform auch nicht parallel zueinander erstrecken, sodass Rastelemente mit der zuvor beschriebenen konischen Form gebildet werden können. Die Seitenflächen eines Vorsprungs sind insbesondere derart zueinander orientiert, dass sich gegenüberliegende seitliche Flächen zweier benachbarter Rastelemente gebildet werden, welche einen siebten Winkel größer Null einschließen, wobei der siebte Winkel bevorzugt zwischen 0,1° und 3,5°, besonders bevorzugt zwischen 0,25° und 3,25°, besonders bevorzugt zwischen 0,5° und 3°, betragen kann. Beträgt der siebte Winkel beispielsweise 0,5°, schließen die seitlichen Flächen jeweils einen Winkel von 0,25° mit einer sich in Auszugsrichtung des Spritzgusswerkzeugs erstreckenden Linie ein.

Durch den Einsatz des Schieberelements kann ferner vorteilhaft auf einfache Weise der Klemmsteg, insbesondere einstückig, an dem Grundgehäuse ausgebildet werden.

Insbesondere können mehrere oder alle Rasteinrichtungen des Grundgehäuses mit dem vorbeschriebenen Herstellungsverfahren hergestellt werden. Insbesondere können die Eckbereiche identisch oder unterschiedlich, insbesondere im Hinblick auf die Abmessungen und Dimensionierungen der Rasteinrichtungen, ausgebildet sein.

Nachfolgend wird die Erfindung anhand von Ausführungsbeispielen näher erläutert. Es zeigen in
- Fig. 1: eine perspektivische Darstellung eines Grundgehäuses in einer Montageöffnung,
- Fig. 2: eine perspektivische Darstellung des Grundgehäuses außerhalb der Montageöffnung,
- Fig. 3: ein Ausschnitt eines Eckbereichs des Grundgehäuses mit einer Rasteinrichtung,
- Fig. 4: eine weitere Ansicht des Ausschnitts des Eckbereichs des Grundgehäuses mit der Rasteinrichtung,
- Fig. 5: eine Seitenansicht auf eine Seitenfläche des Grundgehäuses,
- Fig. 6: eine Draufsicht auf das Grundgehäuse,
- Fig. 7: das Prinzip der Herstellung der Rasteinrichtung,
- Fig. 8: eine Detailansicht des Ausschnitts A aus Figur 5,
- Fig. 9: eine perspektivische Ansicht eines Ausschnitts des Querschnitts entlang Linie B - B aus Figur 5,
- Fig. 10: eine Draufsicht auf den Ausschnitt des Querschnitts entlang Linie B - B aus Figur 5, und
- Fig. 11: eine perspektivische Ansicht auf einen Eckbereich mit Rastelementen gemäß einer weiteren Ausführungsform,
- Fig. 12: eine seitliche Draufsicht auf den Eckbereich aus Figur 11.

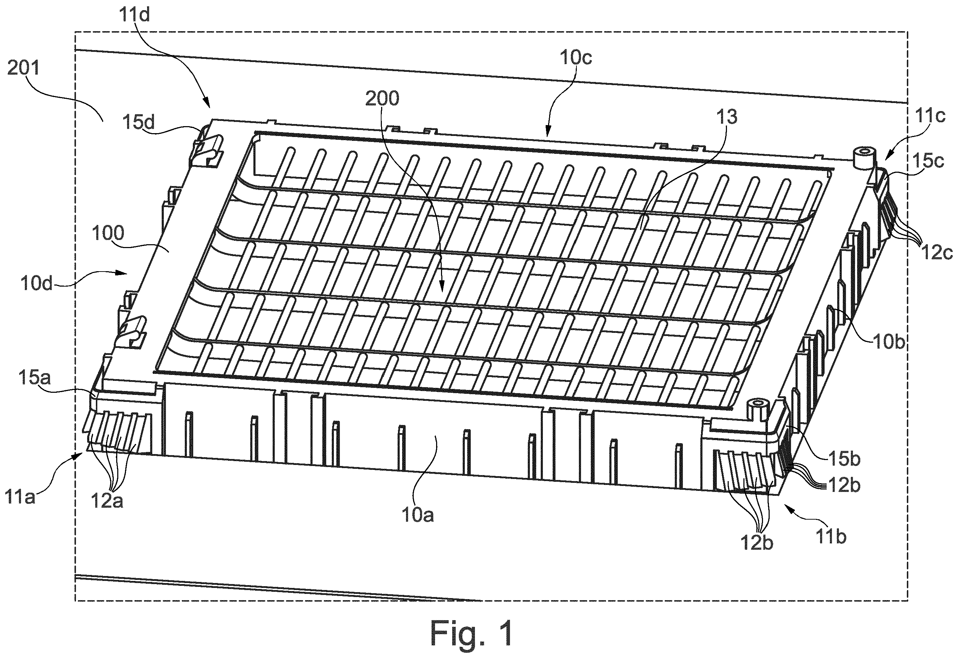

Figur 1 zeigt eine perspektivische Darstellung eines Grundgehäuses 100 zur Verwendung in einem hier nicht dargestellten Austrittsfilter oder einem Filterlüfter. Das rechteckige Grundgehäuse 100 ist rahmenartig geformt mit vier Seitenteilen, welche jeweils Seitenflächen 10a, 10b, 10c, 10d aufweisen, welche nach außen gewandt und Teil einer Umfangsfläche des Grundgehäuses 100 sind. In einer Öffnungsfläche des Grundgehäuses 100 ist ein Schutzgitter 13 angeordnet.

Das Grundgehäuse 100 weist vier Eckbereiche auf, an denen jeweils zwei Seitenflächen 10a, 10b, 10c, 10d aneinandergrenzen. In jedem der vier Eckbereiche ist eine Rasteinrichtung 11a, 11b, 11c, 11d angeordnet, mittels welcher das Grundgehäuse 100 in einer Montageöffnung 200 einer Wand 201 verrastet und befestigt werden kann.

Jede der Rasteinrichtungen 11a, 11b, 11c, 11d weist acht Rastelemente 12a, 12b, 12c, 12d auf, wobei sich je vier der Rastelemente 12a, 12b, 12c, 12d einer Rasteinrichtung 11a, 11b, 11c, 11d entlang einer der Seitenflächen 10a, 10b, 10c, 10d, welche dem jeweiligen Eckbereich zugeordnet sind, erstrecken. Die Rastelemente 12a, 12b, 12c, 12d sind als Rastlaschen ausgebildet, welche sich parallel in Richtung der Wand 201 erstrecken. Freie Enden der Rastelemente 12a, 12b, 12c, 12d liegen der Wand 201 gegenüber und bilden Rastflächen zur Anlage an der Wand 201, sodass das Grundgehäuse 100 in der Rastposition in der Montageöffnung 200 fixiert ist.

Die Rastelemente 12a, 12b, 12c, 12d sind elastisch ausgebildet bzw. elastisch an dem Grundgehäuse gelagert, sodass die Rastelemente 12a, 12b, 12c, 12d während des Einschiebens des Grundgehäuses 100 in die Montageöffnung 200 in Richtung der Seitenflächen 10a, 10b, 10c, 10d gedrückt und vorgespannt werden können. Die Rastelemente 12a, 12b, 12c, 12d einer Rasteinrichtung 11a, 11b, 11c, 11d sind jeweils an einem gemeinsamen Klemmsteg 15a, 15b, 15c, 15d angeordnet, welcher sich beabstandet von den Seitenflächen 10a, 10b, 10c, 10d in Umfangsrichtung des Grundgehäuses 100 um die Ecke des jeweiligen Eckbereichs erstrecken. Die Klemmstege 15a, 15b, 15c, 15d sind L-förmig ausgebildet und endseitig an den Seitenflächen 10a, 10b, 10c, 10d befestigt.

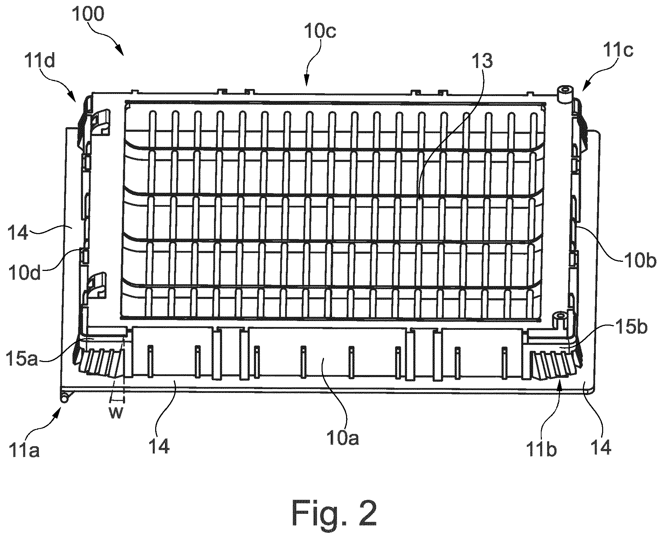

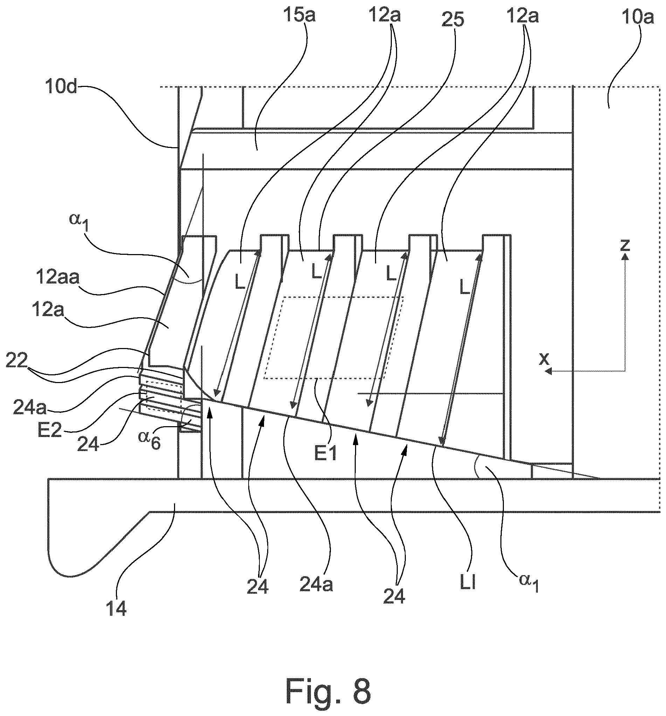

Figur 2 zeigt eine weitere perspektivische Ansicht des Grundgehäuses 100, wobei dieses nicht in der Montageöffnung 200 der Wand 201 angeordnet ist. Zu erkennen ist ein umlaufender Flansch 14 des Grundgehäuses 100, welcher zur Fixierung des Grundgehäuses 100 in der Montageöffnung 200 hinter die Wand 201 greift, sodass die Wand 201 zwischen dem Flansch 14 und den Rastflächen der Rastelemente 12a, 12b, 12c, 12d eingeklemmt ist bzw. das Grundgehäuse 100 an der Wand 201 in der Montageöffnung 200 verrastet ist. Ferner ist in Figur 2 dargestellt, dass sich die Rastelemente 12a, 12b, 12c, 12d in einem Winkel α₁, welcher in Figur 8 näher gezeigt ist, von den Seitenflächen 10a, 10b, 10c, 10d erstrecken. Insbesondere erstrecken sich ausschließlich die nach außen, den Seitenflächen 10a, 10b, 10c, 10d abgewandten Außenflächen der Rastelemente 12a, 12b, 12c, 12d in einem Winkel α₁. Eine insbesondere rechteckförmige Querschnittsfläche der Rastelemente vergrößert sich entsprechend von einem Befestigungsbereich der Rastelemente 12a, 12b, 12c, 12d an den Seitenflächen 10a, 10b, 10c, 10d hin zu den freien Enden der Rastelemente 12a, 12b, 12c, 12d.

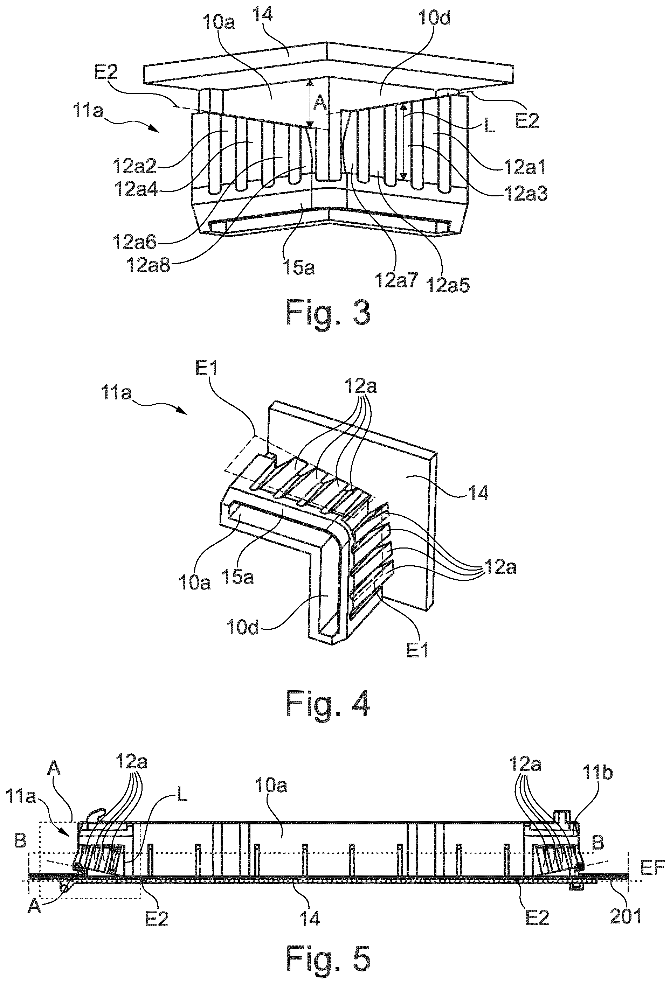

Der Winkel α₁der Rastelemente 12a, 12b, 12c, 12d verringert sich in Umfangsrichtung betrachtet hin zu einer Ecke des Eckbereichs. Dabei sind die nach außen, den Seitenflächen 10a, 10b, 10c, 10d abgewandten Flächen der Rastelemente 12a, 12b, 12c, 12d einer Seitenfläche 10a, 10b, 10c, 10d in einer gemeinsamen Ebene E3, E4 angeordnet wie in Figur 4 dargestellt. Die Ebenen E3, E4 sind schräg angeordnet sowohl zu einer Ebene des Flansches 14 als auch zu den Seitenflächen 10a, 10b, 10c, 10d.

Figur 3 zeigt einen Detailausschnitt einer Rasteinrichtung 11a, wobei die übrigen Rasteinrichtungen 11b, 11c, 11d analog zur Rasteinrichtung 11a ausgebildet sind. Dargestellt ist insbesondere, dass die Rastelemente 12a1 bis 12a8unterschiedliche Längen L aufweisen, wobei die Längen L der Rastelemente 12a1, 12a3, 12a5, 12a7 an der Seitenfläche 10d in Umfangsrichtung betrachtet hin zu der Ecke des Eckbereichs abnehmen. Gleiches gilt für die Rastelemente 12a2, 12a4, 12a6, 12a8 der Seitenfläche 10a. Im Hinblick auf die Längen der Rastelemente 12a1 bis 12a8 sind diese wie folgt ausgehend von dem längsten hin zu dem kürzesten Rastelelement sortiert: 12a1 - 12a2-12a3-12a4-12a5-12a6-12a7-12a8. Nummeriert man die Rastelemente in Bezug auf deren Länge, sind die Rastelemente mit einer geraden Nummer (12a2, 12a4, 12a6, 12a8) an einer Seitenfläche 10a und die Rastelemente mit einer ungeraden Nummer (12a1, 12a3, 12a5, 12a7) an der anderen Seitenfläche 10d der gleichen Rasteinrichtung angeordnet. Dadurch wird durch jedes der Rastelemente 12a1 bis 12a8 eine Raststufe zur Verrastung des Grundgehäuses 100 an Wänden 201 unterschiedlicher Wandstärke bereitgestellt, da ein Abstand A zwischen den der Ebene EF des Flansches 14 gegenüberliegenden Rastflächen der Rastelemente 12a1 bis 12a8 und der Ebene EF des Flansches 14 für jedes Rastelement 12a1 bis 12a8 variiert und wie hier gezeigt hin zu der Ecke des Eckbereichs zunimmt. Der Abstand A korrespondiert mit der Wandstärke der Wand 201, welche jeweils zwischen dem Rastelement 12a1 bis 12a8 und dem Flansch 14 aufgenommen werden kann.

Die Längenabnahme der Rastelemente 12a1, 12a3, 12a5, 12a7 bzw. der Rastelemente 12a2, 12a4, 12a6, 12a8 ist insbesondere linear, sodass die dem Flansch 14 gegenüberliegenden Flächen der Rastelemente 12a3, 12a5, 12a5 bzw. der Rastelemente 12a2, 12a4, 12a6, 12a8 einer Seitenfläche 10a, 10d jeweils in einer Ebene E1, E2 angeordnet sind.

Figur 4 zeigt eine weitere Detailansicht der Rasteinrichtung 11a, wobei die Ebenen E3, E4 dargestellt sind, welche durch die äußeren Seiten der Rastelemente 12a aufgespannt werden. Sowohl durch die Verteilung der Längen der Rastelemente 12a1 bis 12a8 wie in Figur 3 gezeigt als auch das Hervorstehen der Rastelemente wie in Figur 4 gezeigt kann mit Vorteil erreicht werden, dass an beiden Seitenflächen 10a, 10d stets jeweils ein Rastelement greift. Zum einen wird dies erreicht, da wie in Figur 3 gezeigt die Rastelemente unterschiedliche Längen aufweisen. Zum anderen bewirkt das Hervorstehen der Rastelemente 12a wie in Figur 4 gezeigt, dass auch zwei Rastelemente 12a unterschiedlicher Länge gleichzeitig greifen, da diese unterschiedlich weit von der Seitenfläche 10a, 10d hervorstehen. Ein erstes Rastelement 12a, welches gegenüber einem zweiten Rastelement 12a länger ist, aber weiter von der Seitenfläche 10a, 10b, 10c, 10d hervorsteht als das zweite Rastelement 12a, kann gleichzeitig mit dem zweiten Rastelement 12a greifen, aufgrund der elastischen Eigenschaften und der damit verbundenen möglichen Biegung der Rastelemente 12a.

In Figur 5 ist das Grundgehäuse 100 in einer Seitenansicht auf die Seitenfläche 10a gezeigt. Das Grundgehäuse 100 ist in die Montageöffnung 200 eingesetzt und dort fixiert durch Anlage eines Kantenbereichs der Wand 201 zu einen an dem Flansch 14 und zum anderen an der Rasteinrichtung 11a. Hier ist das Grundgehäuse 100 an einer Wand 201 mit einer verhältnismäßig geringen Wandstärke befestigt, sodass die Rastelemente 12a, 12b, 12c, 12d mit der größten Länge L einer jeden Rasteinrichtung 11a, 11b, 11c, 11d das Grundgehäuse 100 an der Wand 201 fixieren. In diesem Fall sind das ausgehend von der Ecke eines Eckbereichs betrachtet die jeweils äußersten Rastelemente 12a, 12b, 12c, 12d einer jeden Rasteinrichtung 11a, 11b, 11c, 11d jeweils nur einer der Seitenflächen 10a, 10b, 10c, 10d angeordnet ist. Bei einer Befestigung des Grundgehäuses 100 an Wänden 201 mit einer größeren Wandstärke, würde entsprechend nicht mehr das längste Rastelement 12a, 12b, 12c, 12d greifen, sondern ein entsprechend kürzeres.

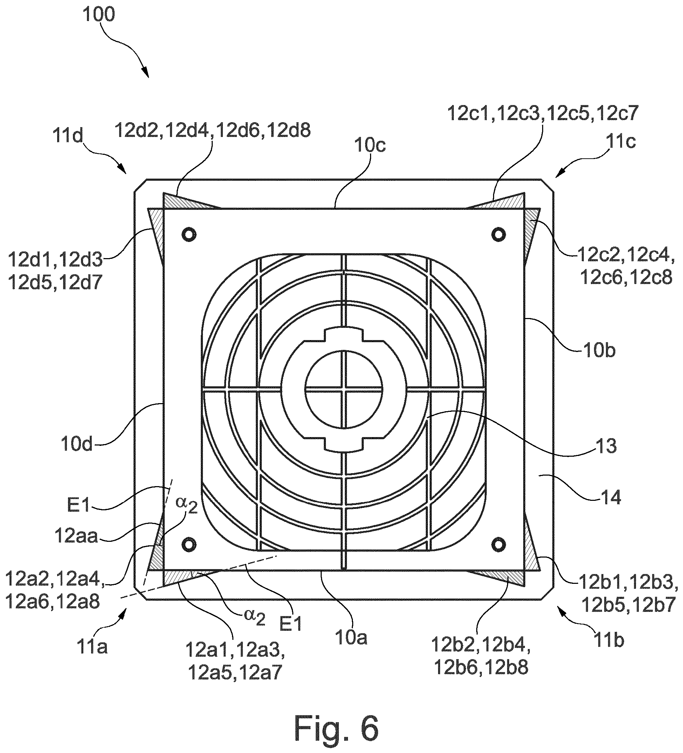

Figur 6 zeigt eine Draufsicht auf das Grundgehäuse 100. Analog zur Bezeichnung der Rastelemente 12a1 bis 12a8 der Rasteinrichtung 11a aus Figur 3 weisen die übrigen Rasteinrichtungen 11a, 11b, 11c, 11d nach dem gleichen Prinzip Rastelemente 12b1 bis 12b8, 12c1 bis 12c8 und 12d1 bis 12d8 auf. Die Rasteinrichtungen 11a, 11b, 11c, 11d sind dabei identisch ausgebildet.

Figur 6 zeigt ferner, dass die Außenflächen 12aa der Rastelemente 12a2, 12a4, 12a6, 12a8 einer Seitenfläche 10d in einer ersten Ebene E1 angeordnet sind, welche einen zweiten Winkel α₂ mit der Ebene der Seitenfläche 10d einschließt. Ein solcher Winkel α₂ ist ebenfalls an den übrigen Seitenflächen 10a, 10b, 10c, 10d vorhanden.

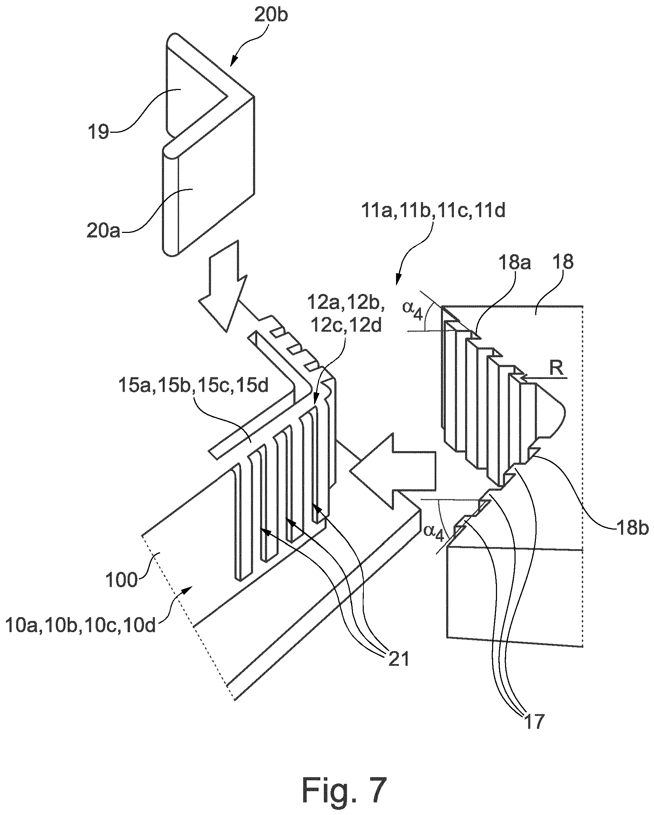

Figur 7 zeigt schematisch das Prinzip der Herstellung einer Rasteinrichtung 11a, 11b, 11c, 11d in einem Spritzgussverfahren mittels einer entsprechenden Spritzgussform 18 sowie eines Schieberelements 19. Bei der hier dargestellten Spritzgussform 18 handelt es sich nur um einen Teilbereich einer Spritzgussform zur Herstellung des Grundgehäuses 100. Die Spritzgussform 18 ist im Wesentlichen komplementär zu der Rasteinrichtung 11a, 11b, 11c, 11d in einem Eckbereich ausgebildet und weist zwei Innenseitenflächen 18a, 18b auf, welche an die Form der Seitenflächen 10a, 10b, 10c, 10d angepasst sind.

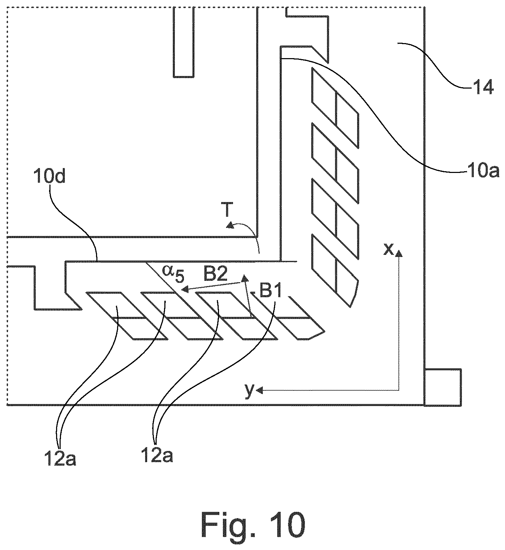

Von den Innenseitenflächen 18a, 18b stehen jeweils Vorsprünge 17 hervor, wobei sich sämtliche Vorsprünge 17 in die gleiche Richtung R erstrecken. Dabei stehen die Vorsprünge insbesondere in einem dritten Winkel α₄ von 45° von der jeweiligen Innenseitenfläche 18a, 18b hervor. Der Winkel ist in Figur 10 als α₅ gezeigt. Die Spritzgussform wird in dem zu formenden Eckbereich des Grundgehäuses 100 angeordnet und das Schieberelement 19 derart an der Spritzgussform 18 platziert, dass die freien Enden der Vorsprünge 17 an Außenseiten 20a, 20b des winkelförmigen Schieberelements 19 anliegen. Anschließend wird das Spritzgussmaterial eingebracht, sodass sich die Rastelemente und der Klemmsteg 15a, 15b, 15c, 15d zwischen den Vorsprüngen 17 und dem Schieberelement 19 ausbilden. Nach dem Aushärten des Materials kann die Spritzgussform 18 entgegen der Richtung R entfernt werden, wobei die Vorsprünge 17 aus den Zwischenräumen 21 zwischen den Rastelementen 12a, 12b, 12c, 12d herausgeschoben werden. Dies ist möglich, da sich sämtliche Vorsprünge 17 in die gleiche Richtung R erstrecken. Somit erstrecken sich auch die zwischen den Vorsprüngen 17 ausgebildeten Rastelemente 12a, 12b, 12c, 12d in Richtung R von den Seitenflächen 10a, 10b, 10c, 10d.

Figur 8 zeigt eine Detailansicht des Ausschnitts A aus Figur 5. Gezeigt ist eine Draufsicht auf eine Seitenfläche 10a in einem Eckbereich. Dargestellt sind die Rastelemente 12a an der Seitenfläche 10a, welche unterschiedliche Längen L untereinander aufweisen, wobei die Länge L jeweils an einer längsten Erstreckung ausgehend von einem Befestigungspunkt 25, welcher hier exemplarisch lediglich für eines der Rastelemente 12a gezeigt ist und für die übrigen Rastelemente 12a entsprechend angeordnet ist, hin zu Endflächen 24 der Rastelemente 12a gemessen wird. Dabei ist zu erkennen, dass die Längen L der Rastelemente 12a ausgehend von der Eckkante des Eckbereichs in Umfangsrichtung betrachtet (in dieser Darstellung von links nach rechts) zunimmt. Ferner weisen die Rastelemente 12a jeweils freie Endflächen 24 auf, wobei eine der Seitenfläche 10a abgewandte äußere Kanten 24a der Endflächen 24 sämtlicher Rastelemente 12a einer Seitenfläche entlang einer gemeinsamen Linie LI angeordnet sind. Diese Linie LI schließt mit der Ebene EF des Flansches 14 einen vierten Winkel α₄ ein, welcher größer als Null ist. Die Linie LI verläuft somit schräg abfallend gegenüber dem Flansch 14 ausgehend von der Eckkante betrachtet.

An der weiteren Seitenfläche 10b sind weitere Rastelemente 12a angeordnet, wobei dargestellt ist, dass die Endflächen 24 der Rastelemente in einer zweiten Ebene E2 angeordnet sind, welche einen sechsten Winkel α₆ mit der Ebene der Seitenfläche 10d einschließt. Dieser Winkel ist insbesondere kleiner als 90°. Weiterhin schließen die der Seitenfläche 10d abgewandten Außenflächen 12aa, welche hier nur exemplarisch für das vorderste Rastelement 12a eingezeichnet sind, dem dritten Winkel α₁ mit der Ebene der Seitenfläche 10d ein, wodurch die Rastelemente 12a von der Seitenfläche 10d hervorstehen.

Figur 8 zeigt ferner, dass jene Rastelemente 12a unmittelbar benachbart zur Eckkante des Grundgehäuses 100 eine Aussparung 22 aufweisen.

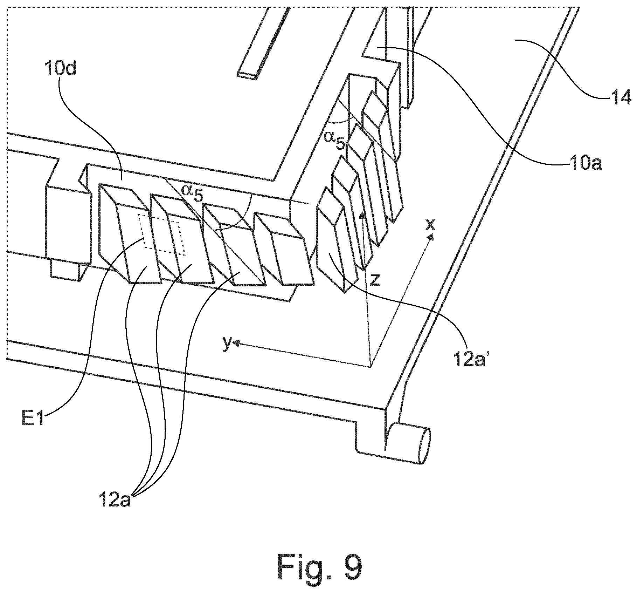

Figuren 9 und 10 zeigen den Ausschnitt der Querschnittsansicht entlang Linie B - B aus Figur 5. Insbesondere ist der Eckbereich mit einer Rasteinrichtung gezeigt. Figur 9 zeigt eine perspektivische Ansicht auf den Querschnitt, wobei dargestellt ist, dass die Rastelemente 12a seitlich geneigt sind, sodass seitliche Flächen 12a' der Rastelemente 12a jeweils einen fünften Winkel α₅ mit der Ebene der Seitenfläche 10d einschließt. Dieser Winkel beträgt beispielsweise 45° und ist für sämtliche Seitenflächen sämtlicher Rastelemente 12a identisch. Dabei wird jeweils der kleinere Winkel, wie anhand der beiden in Figur 9 eingezeichneten Winkel α₅ erkennbar.

In Figur 10 sind ferner die Querschnittsflächen der Rastelemente 12a senkrecht zu jeweils deren Längserstreckung gezeigt. Die Querschnittsflächen weisen annähernd die Form eines Parallelogramms auf, wobei diese Form hin zu den Endflächen 24 übergeht in die Form eines asymmetrischen Trapezes aufgrund der Lage der ersten Ebene E1.

Die erste Ebene E1 ist wie insbesondere in Figur 9 zu erkennen relativ zu der Ebene der Seitenfläche 10d gekippt bzw. rotiert. Dabei ist die Ebene E1 zum einen um die Z-Achse relativ zu der Ebene der Seitenfläche 10d gekippt. Dadurch ergibt sich insbesondere der in Figur 6 gezeigte zweite Winkel α₂, sodass die Rastelemente 12a unterschiedlich weit von der Seitenfläche 10d hervorstehen. Ferner ist die Ebene E1 um die y-Achse relativ zu der Ebene der Seitenfläche 10d gekippt. Dadurch ergibt sich insbesondere der in Figur 8 gezeigte Winkel α₁.

In Figur 10 sind ferner die Biegerichtungen B1, B2 dargestellt, in welche ein jedes Rastelement 12a während des Einschiebens des Grundgehäuses 100 in eine Montageöffnung 200 gebogen wird. Zum einen wird das Rastelement in Richtung B1 hin zu der Seitenfläche 10d gebogen. Gleichzeitig erfolgt eine Biegung in Richtung B2 aufgrund der schrägen Anordnung der Außenfläche 12aa des Rastelements 12a in der Ebene E1. Die gleichzeitige Biegung in die Biegerichtungen B1, B2 resultiert in einer Torsionsbewegung der Rastelemente 12a im Wesentlichen entlang des Pfeils T. Während dieser Torsionsbewegung richtet sich die Außenfläche 12aa an der Kante der Montageöffnung 200 aus. Während des Einschiebens liegen demnach die Außenflächen 12aa an der Kante der Montageöffnung 200 an.

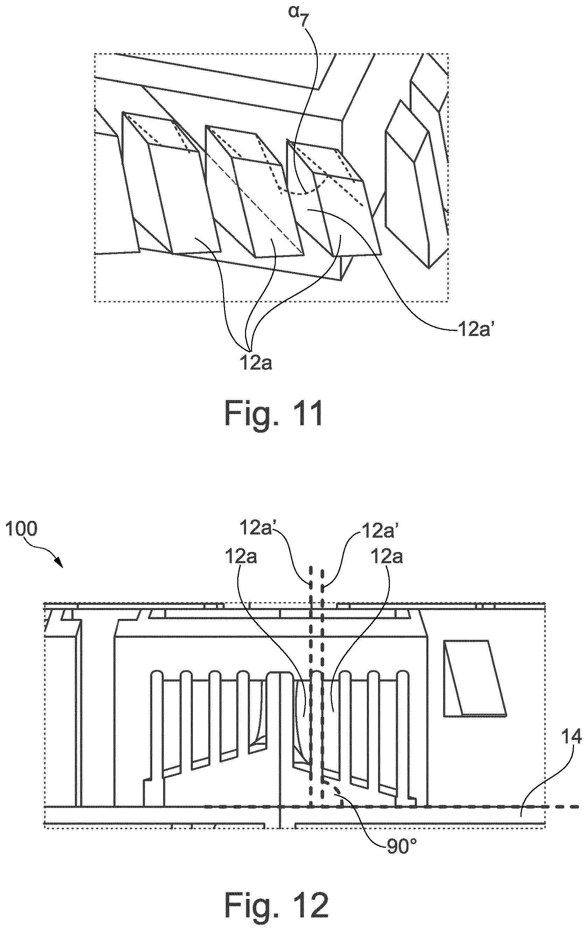

Figur 11 zeigt eine perspektivische Ansicht eines Eckbereichs mit einer Rasteinrichtung, wobei benachbarte Rastelemente 12a sich gegenüberliegende seitliche Flächen 12a' aufweisen, welche nicht parallel zueinander angeordnet sind, sondern einen siebten Winkel α₇ einschließen, wie in der Figur 11 ausschließlich durch die gestrichelten Linien angedeutet. Die Rastelemente 12a wurden bei einer Formgebung gemäß der Linien, welche den siebten Winkel α₇ definieren, in einer Draufsicht konisch zum freien Ende hin zu laufen.

Figur 12 zeigt, dass bei einer Ausgestaltung der Rastelemente 12a wie in Figur 11 angedeutet, die seitlichen Flächen 12a' weiterhin parallel zu einer Ebene des Flansches 14 verlaufen, wie durch die beiden parallelen, gestrichelten Linien angedeutet, welche sich entlang der jeweiligen Seitenfläche 12a' erstrecken.

### Bezugszeichenliste

- 200: Montageöffnung
- 201: Wand
- 100: Grundgehäuse

- 10a-d: Seitenflächen
- 11a-d: Rasteinrichtungen
- 12a-d: Rastelemente
- 12a1-12a8: Rastelemente
- 12aa: Außenflächen
- 12a': seitliche Flächen

- 13: Schutzgitter
- 14: Flansch
- 15a-d: Klemmsteg
- 16: Hohlräume
- 17: Vorsprünge
- 18: Spritzgussform
- 19: Schieberelement
- 20a, b: Außenseiten
- 21: Zwischenräume
- 22: Aussparung
- 24: Endflächen
- 24a: Kanten
- 25: Befestigungspunkt

- E1, E2: Ebenen
- A: Abstand
- L: Länge
- α₁ bis α₇: Winkel
- R: Richtung
- B1, B2: Biegerichtungen
- T: Torsionsrichtung

## Patentansprüche

1. Grundgehäuse (100) für einen Filterlüfter oder für einen Austrittsfilter, wobei das Grundgehäuse (100) rahmenartig ausgebildet ist mit, insbesondere vier, Seitenflächen (10a, 10b, 10c, 10d), wobei jede Seitenfläche (10a, 10b, 10c, 10d) in Eckbereichen des Grundgehäuses (100) jeweils an eine benachbarte Seitenfläche (10a, 10b, 10c, 10d) angrenzt, wobei in wenigstens zwei, bevorzugt diagonal gegenüberliegenden, Eckbereichen des Grundgehäuses (100) jeweils eine Rasteinrichtung (11a, 11b, 11c, 11d) umfassend jeweils wenigstens zwei Rastelemente (12a, 12b, 12c, 12d), die insbesondere federelastisch ausgebildet sind, zur Montage des Grundgehäuses (100) in einer Montageöffnung angeordnet sind, wobei die wenigstens zwei Rastelemente (12a, 12b, 12c, 12d), insbesondere Rastlaschen, einer Rasteinrichtung an unterschiedlichen Seitenflächen (10a, 10b, 10c, 10d) des Grundgehäuses (100) angeordnet sind.

2. Grundgehäuse (100) nach Anspruch 1, wobei die Rasteinrichtungen (11a, 11b, 11c, 11d) an den unterschiedlichen Seitenflächen (10a, 10b, 10c, 10d) eines Eckbereichs jeweils wenigstens zwei, bevorzugt drei bis zwölf Rastelemente (12a, 12b, 12c, 12d) aufweisen.

3. Grundgehäuse (100) nach Anspruch 2, wobei die Rastelemente (12a, 12b, 12c, 12d) Rastlaschen sind und die Rastelemente (12a, 12b, 12c, 12d) einer Seitenfläche (10a, 10b, 10c, 10d) unterschiedliche Längen (L) aufweisen.

4. Grundgehäuse (100) nach einem der vorgenannten Ansprüche, wobei die Rastelemente (12a, 12b, 12c, 12d) einer Rasteinrichtung (11a, 11b, 11c, 11d), die auf derselben Seitenfläche (10a, 10b, 10c, 10d) angeordnet sind, in Umfangsrichtung des Grundgehäuses (100) benachbart zueinander angeordnet sind und eine Länge (L) der Rastelemente (12a, 12b, 12c, 12d) ausgehend von einer Ecke des Eckbereichs entlang der Umfangsrichtung betrachtet, insbesondere linear, zunimmt oder abnimmt.

5. Grundgehäuse (100) nach einem der vorgenannten Ansprüche, wobei sämtliche Rastelemente (12a, 12b, 12c, 12d) einer Rasteinrichtung (11a, 11b, 11c, 11d) unterschiedliche Längen (L) zueinander aufweisen, wobei insbesondere ausgehend von dem kürzesten Rastelement (12a, 12b, 12c, 12d) hin zu dem längsten Rastelement (12a, 12b, 12c, 12d) die Rastelemente (12a, 12b, 12c, 12d) abwechselnd auf die zwei Seitenflächen (10a, 10b, 10c, 10d) eines Eckbereichs verteilt sind.

6. Grundgehäuse (100) nach einem der vorgenannten Ansprüche, wobei die Rastelemente (12a, 12b, 12c, 12d) vollständig oder abschnittsweise jeweils in einem ersten Winkel (α₁ ) zu einer Ebene der Seitenfläche von der Seitenfläche (10a, 10b, 10c, 10d) hervorstehen.

7. Grundgehäuse (100) nach Anspruch 5, wobei der erste Winkel (α₁) der Rastelemente (12a, 12b, 12c, 12d) einer Seitenfläche (10a, 10b, 10c, 10d) ausgehend von einer Ecke des Eckbereichs entlang der Umfangsrichtung betrachtet, insbesondere linear, zunimmt oder abnimmt.

8. Grundgehäuse (100) nach einem der vorgenannten Ansprüche, wobei die Rastelemente (12a, 12b, 12c, 12d) Endflächen aufweisen, wobei der Seitenfläche (10a, 10b, 10c, 10d) abgewandte Kanten der Endflächen der Rastelemente (12a, 12b, 12c, 12d) einer Seitenfläche (10a, 10b, 10c, 10d) entlang einer Linie (LI) angeordnet sind und wobei Längen der Rastelemente (12a, 12b, 12c, 12d) entlang der Linie (LI) betrachtet zunehmen oder abnehmen und/oder wobei die Linie (LI) in einem zweiten Winkel (α₂) größer als Null zu der Seitenfläche (10a, 10b, 10c, 10d) angeordnet ist.

9. Grundgehäuse (100) nach einem der vorgenannten Ansprüche, wobei entlang einer Längsachse der Rastelemente (12a, 12b, 12c, 12d) hin zu einem freien Ende der Rastelemente (12a, 12b, 12c, 12d) betrachtet eine Querschnittsfläche der Rastelemente zunimmt.

10. Grundgehäuse (100) nach einem der vorgenannten Ansprüche, wobei die Rastelemente (12a, 12b, 12c, 12d) einstückig mit dem Grundgehäuse (100) ausgebildet sind oder als separate, mit dem Grundgehäuse (100) verbundene Elemente ausgebildet sind.

11. Grundgehäuse (100) nach einem der vorgenannten Ansprüche, wobei in wenigstens zwei, insbesondere in jedem, der Eckbereiche des Grundgehäuses (100) eine Rasteinrichtung (11a, 11b, 11c, 11d) angeordnet ist und wobei bevorzugt die Rasteinrichtungen (11a, 11b, 11c, 11d) identisch ausgebildet sind.

12. Grundgehäuse (100) nach einem der vorgenannten Ansprüche, wobei die Rastelemente (12a, 12b, 12c, 12d) einer Rasteinrichtung (11a, 11b, 11c, 11d) an einem an dem Grundgehäuse (100) befestigten, winkelförmigen Klemmsteg (15a, 15b, 15c, 15d) angeordnet sind, wobei der Klemmsteg (15a, 15b, 15c, 15d) sich beabstandet von dem Grundgehäuse (100) um eine Ecke des Eckbereichs erstreckt, wobei bevorzugt der Klemmsteg (15a, 15b, 15c, 15d) ausschließlich an dessen beiden Endbereichen an dem Grundgehäuse (100) befestigt ist.

13. Filterlüfter oder Austrittsfilter, aufweisend ein Grundgehäuse (100) nach einem der vorgenannten Ansprüche.

14. Verfahren zur Herstellung eines Grundgehäuses (100) nach einem der Ansprüche 1 bis 12, umfassend die folgenden Schritte:
- Bereitstellen einer Spritzgussform (17), wobei die Spritzgussform (18) zwei Innenseitenflächen (18a, 18b) aufweist, welche komplementär zu den Seitenflächen (10a-d) eines Eckbereichs des Grundgehäuses (100) ausgebildet sind, wobei an den Innenseitenflächen (18a, 18b) jeweils mehrere Vorsprünge (17) angeordnet sind, welche Zwischenräumen (21) zwischen den zu formenden Rastelementen (12a-d) der Rasteinrichtung (11a-d) entsprechen, wobei die Vorsprünge (17) beider Innenseitenflächen (18a, 18b) in einer gleichen Richtung (R), bevorzugt in einem dritten Winkel (α₃) von zwischen 40° bis 50°, von der Spritzgussform (18) hervorstehen,
- Befüllen der Spritzgussform (18) mit dem Spritzgussmaterial, wobei die Rastelemente (12a-d ) zwischen den Vorsprüngen (17) ausgebildet werden,
- Aushärten des Spritzgussmaterials, und
- Entfernen der Spritzgussform (18), wobei die Spritzgussform (18) entgegen der Richtung (R), in welcher die Vorsprünge (17) von der Spritzgussform (18) hervorstehen, von dem Grundgehäuse (100) weg bewegt wird.

15. Verfahren nach Anspruch 14, wobei ein winkelförmiges Schieberelement (19) in die Spritzgussform (18) eingelegt wird, derart, dass das Schieberelement (19) an freien Enden der Vorsprünge (17) anliegt, zur Ausbildung eines an dem Grundgehäuse (100) beabstandet angeordneten und sich um die Ecke des Eckbereichs erstreckenden winkelförmigen Klemmstegs (15a-d), an welchem die Rastelemente (12a-d) angeordnet sind.

## Geänderte Patentansprüche

### Geänderte Patentansprüche gemäss Regel 137(2) EPÜ.

1. Grundgehäuse (100) für einen Filterlüfter oder für einen Austrittsfilter, wobei das Grundgehäuse (100) rahmenartig ausgebildet ist mit, insbesondere vier, Seitenflächen (10a, 10b, 10c, 10d), wobei jede Seitenfläche (10a, 10b, 10c, 10d) in Eckbereichen des Grundgehäuses (100) jeweils an eine benachbarte Seitenfläche (10a, 10b, 10c, 10d) angrenzt, wobei in wenigstens zwei, bevorzugt diagonal gegenüberliegenden, Eckbereichen des Grundgehäuses (100) jeweils eine Rasteinrichtung (11a, 11b, 11c, 11d) umfassend jeweils wenigstens zwei Rastelemente (12a, 12b, 12c, 12d), die insbesondere federelastisch ausgebildet sind, zur Montage des Grundgehäuses (100) in einer Montageöffnung angeordnet sind, wobei die wenigstens zwei Rastelemente (12a, 12b, 12c, 12d), insbesondere Rastlaschen, einer Rasteinrichtung (11a, 11b, 11c, 11d) an unterschiedlichen Seitenflächen (10a, 10b, 10c, 10d) des Grundgehäuses (100) angeordnet sind, wobei sämtliche Rastelemente (12a, 12b, 12c, 12d) einer Rasteinrichtung (11a, 11b, 11c, 11d) unterschiedliche Längen (L) zueinander aufweisen, wobei ausgehend von dem kürzesten Rastelement (12a, 12b, 12c, 12d) hin zu dem längsten Rastelement (12a, 12b, 12c, 12d) die Rastelemente (12a, 12b, 12c, 12d) abwechselnd auf die zwei Seitenflächen (10a, 10b, 10c, 10d) eines Eckbereichs verteilt sind.

2. Grundgehäuse (100) nach Anspruch 1, wobei die Rasteinrichtungen (11a, 11b, 11c, 11d) an den unterschiedlichen Seitenflächen (10a, 10b, 10c, 10d) eines Eckbereichs jeweils wenigstens zwei, bevorzugt drei bis zwölf Rastelemente (12a, 12b, 12c, 12d) aufweisen.

3. Grundgehäuse (100) nach Anspruch 2, wobei die Rastelemente (12a, 12b, 12c, 12d) Rastlaschen sind und die Rastelemente (12a, 12b, 12c, 12d) einer Seitenfläche (10a, 10b, 10c, 10d) unterschiedliche Längen (L) aufweisen.

4. Grundgehäuse (100) nach einem der vorgenannten Ansprüche, wobei die Rastelemente (12a, 12b, 12c, 12d) einer Rasteinrichtung (11a, 11b, 11c, 11d), die auf derselben Seitenfläche (10a, 10b, 10c, 10d) angeordnet sind, in Umfangsrichtung des Grundgehäuses (100) benachbart zueinander angeordnet sind und eine Länge (L) der Rastelemente (12a, 12b, 12c, 12d) ausgehend von einer Ecke des Eckbereichs entlang der Umfangsrichtung betrachtet, insbesondere linear, zunimmt oder abnimmt.

5. Grundgehäuse (100) nach einem der vorgenannten Ansprüche, wobei die Rastelemente (12a, 12b, 12c, 12d) vollständig oder abschnittsweise jeweils in einem ersten Winkel (α₁ ) zu einer Ebene der Seitenfläche von der Seitenfläche (10a, 10b, 10c, 10d) hervorstehen.

6. Grundgehäuse (100) nach Anspruch 4, wobei der erste Winkel (α₁) der Rastelemente (12a, 12b, 12c, 12d) einer Seitenfläche (10a, 10b, 10c, 10d) ausgehend von einer Ecke des Eckbereichs entlang der Umfangsrichtung betrachtet, insbesondere linear, zunimmt oder abnimmt.

7. Grundgehäuse (100) nach einem der vorgenannten Ansprüche, wobei die Rastelemente (12a, 12b, 12c, 12d) Endflächen aufweisen, wobei der Seitenfläche (10a, 10b, 10c, 10d) abgewandte Kanten der Endflächen der Rastelemente (12a, 12b, 12c, 12d) einer Seitenfläche (10a, 10b, 10c, 10d) entlang einer Linie (LI) angeordnet sind und wobei Längen (L) der Rastelemente (12a, 12b, 12c, 12d) entlang der Linie (LI) betrachtet zunehmen oder abnehmen und/oder wobei die Linie (LI) in einem zweiten Winkel (α₂) größer als Null zu der Seitenfläche (10a, 10b, 10c, 10d) angeordnet ist.

8. Grundgehäuse (100) nach einem der vorgenannten Ansprüche, wobei entlang einer Längsachse der Rastelemente (12a, 12b, 12c, 12d) hin zu einem freien Ende der Rastelemente (12a, 12b, 12c, 12d) betrachtet eine Querschnittsfläche der Rastelemente zunimmt.

9. Grundgehäuse (100) nach einem der vorgenannten Ansprüche, wobei die Rastelemente (12a, 12b, 12c, 12d) einstückig mit dem Grundgehäuse (100) ausgebildet sind oder als separate, mit dem Grundgehäuse (100) verbundene Elemente ausgebildet sind.

10. Grundgehäuse (100) nach einem der vorgenannten Ansprüche, wobei in wenigstens zwei, insbesondere in jedem, der Eckbereiche des Grundgehäuses (100) eine Rasteinrichtung (11a, 11b, 11c, 11d) angeordnet ist und wobei bevorzugt die Rasteinrichtungen (11a, 11b, 11c, 11d) identisch ausgebildet sind.

11. Grundgehäuse (100) nach einem der vorgenannten Ansprüche, wobei die Rastelemente (12a, 12b, 12c, 12d) einer Rasteinrichtung (11a, 11b, 11c, 11d) an einem an dem Grundgehäuse (100) befestigten, winkelförmigen Klemmsteg (15a, 15b, 15c, 15d) angeordnet sind, wobei der Klemmsteg (15a, 15b, 15c, 15d) sich beabstandet von dem Grundgehäuse (100) um eine Ecke des Eckbereichs erstreckt, wobei bevorzugt der Klemmsteg (15a, 15b, 15c, 15d) ausschließlich an dessen beiden Endbereichen an dem Grundgehäuse (100) befestigt ist.

12. Filterlüfter oder Austrittsfilter, aufweisend ein Grundgehäuse (100) nach einem der vorgenannten Ansprüche.

13. Verfahren zur Herstellung eines Grundgehäuses (100) nach einem der Ansprüche 1 bis 11, umfassend die folgenden Schritte:
- Bereitstellen einer Spritzgussform (18), wobei die Spritzgussform (18) zwei Innenseitenflächen (18a, 18b) aufweist, welche komplementär zu den Seitenflächen (10a-d) eines Eckbereichs des Grundgehäuses (100) ausgebildet sind, wobei an den Innenseitenflächen (18a, 18b) jeweils mehrere Vorsprünge (17) angeordnet sind, welche Zwischenräumen (21) zwischen den zu formenden Rastelementen (12a-d) der Rasteinrichtung (11a-d) entsprechen, wobei die Vorsprünge (17) beider Innenseitenflächen (18a, 18b) in einer gleichen Richtung (R)in einem dritten Winkel (α₃) von zwischen 40° bis 50° von der Spritzgussform (18) hervorstehen,
- Befüllen der Spritzgussform (18) mit dem Spritzgussmaterial, wobei die Rastelemente (12a-d ) zwischen den Vorsprüngen (17) ausgebildet werden,
- Aushärten des Spritzgussmaterials, und
- Entfernen der Spritzgussform (18), wobei die Spritzgussform (18) entgegen der Richtung (R), in welcher die Vorsprünge (17) von der Spritzgussform (18) hervorstehen, von dem Grundgehäuse (100) weg bewegt wird.

14. Verfahren nach Anspruch 13, wobei ein winkelförmiges Schieberelement (19) in die Spritzgussform (18) eingelegt wird, derart, dass das Schieberelement (19) an freien Enden der Vorsprünge (17) anliegt, zur Ausbildung eines an dem Grundgehäuse (100) beabstandet angeordneten und sich um die Ecke des Eckbereichs erstreckenden winkelförmigen Klemmstegs (15a-d), an welchem die Rastelemente (12a-d) angeordnet sind.
